# EUROPÄISCHE PATENTANMELDUNG

(11) **EP 4 610 755 A1**
(43) Veröffentlichungstag der Anmeldung: **03.09.2025**
(21) Anmeldenummer: 24160301.8
(22) Anmeldetag: 28.02.2024
(51) Int. Cl.: G05B 19/418, H04L 9/40

(54) **VERFAHREN ZUM GEWÄHREN VON ZUGRIFF AUF FUNKTIONALITÄT IN EINEM INDUSTRIELLEN AUTOMATISIERUNGSSYSTEM, COMPUTERPROGRAMMPRODUKT UND INDUSTRIELLES AUTOMATISIERUNGSSYSTEM**

(71) Anmelder: Siemens Aktiengesellschaft, 80333 München (DE)
(72) Erfinder: Eckl, Roland, 91301 Forchheim (DE)
(74) Vertreter: Siemens Patent Attorneys

(57) **Zusammenfassung**

Die Erfindung betrifft ein Verfahren zum Gewähren von Zugriff auf Funktionalität in einem industriellen Automatisierungssystem (100) mittels einer auf einer Benutzervorrichtung (2) ausgeführten Single-Page-Anwendung (4), umfassend: Laden (S1), durch die Benutzervorrichtung (2), eines auf einer Steuervorrichtung (1) abgelegten ersten Datenabschnitts (41) der Single-Page-Anwendung (4); Nachladen (S2), durch die Benutzervorrichtung (2), einer Anzahl von in dem ersten Datenabschnitt (41) spezifizierten weiteren für die Ausführung der Single-Page-Anwendung (4) benötigten und auf einer externen Servervorrichtung (3) abgelegten Datenabschnitte (42, 43) von der externen Servervorrichtung (3); und Zugreifen (S3) auf die Funktionalität der Steuervorrichtung (1) durch die auf der Benutzervorrichtung (2) ausgeführte Single-Page-Anwendung (4).

Unter Einhaltung einer Single-Origin-Policy kann eine Last der Steuervorrichtung gesenkt und effizienter auf die Funktionalität der Steuervorrichtung zugegriffen.

Außerdem werden ein Computerprogrammprodukt und ein industrielles Automatisierungssystem (100) vorgeschlagen.

## Beschreibung

Die vorliegende Erfindung betrifft das Gebiet der industriellen Automatisierungssysteme und spezieller ein Verfahren zum Gewähren von Zugriff auf Funktionalität in einem industriellen Automatisierungssystem. Weiterhin betrifft die Erfindung ein dementsprechendes Computerprogrammprodukt und ein dementsprechendes industrielles Automatisierungssystem.

Industrielle Automatisierungssysteme dienen der Überwachung, Steuerung und Regelung von technischen Prozessen, insbesondere im Bereich Fertigungs-, Prozess- und Gebäudeautomatisierung, und ermöglichen einen Betrieb von Steuerungsvorrichtungen, Sensoren, Maschinen und industriellen Anlagen, der möglichst selbstständig und unabhängig von menschlichen Eingriffen erfolgen soll. Aufgrund einer ständig steigenden Bedeutung von Informationstechnik für Automatisierungssysteme, die zahlreiche vernetzte Steuerungsvorrichtungen umfassen, gewinnen Verfahren zum zuverlässigen Gewähren von Zugriff auf über ein Automatisierungssystem verteilte Funktionalität zur Bereitstellung von Überwachungs-, Steuerungs- und Regelungsfunktionen verstärkt an Bedeutung.

In einem industriellen Automatisierungssystem kann eine Vielzahl an Steuervorrichtungen, wie PLCs (Programmable Logic Controller), IPCs (Industrial PCs), und andere eingebettete und/oder eingeschränkte Geräte (embedded devices, constrained devices), zum Einsatz kommen. Eine jeweilige Steuervorrichtung bietet in der Regel eine Schnittstelle, über die auf die jeweilige Steuervorrichtung zugegriffen werden kann. Über die Schnittstelle kann eine Vielzahl an unterschiedlichen Informationen abgefragt werden, wie z. B. ein aktueller Status der Steuervorrichtung, Konfigurationsdaten der Steuervorrichtung, System- und Nutzer-Variablen, Diagnose-Informationen (wie Traces, Alarme, Logs ...) oder ein Backup einer aktuellen Konfiguration der Steuervorrichtung. Über die Schnittstelle ist es teilweise möglich, Daten nicht nur einzusehen, sondern auf diese zuzugreifen und zu verändern.

Hierzu kann auf der Steuerungseinheit eine Webanwendung installiert sein, welche den Zugriff auf die Schnittstelle über eine auf einer Benutzervorrichtung ausgeführte Clientanwendung, wie etwa einen Webbrowser über http oder https, ermöglicht. Die serverseitige Ausführung der Geschäftslogik einer solchen Webanwendung auf der Steuervorrichtung erweist sich jedoch als nachteilig, da hierdurch unter anderem eine hohe Rechenlast auf der Steuervorrichtung entsteht, die ggf. die Möglichkeiten der Steuervorrichtung übersteigt.

Die EP 3 438 774 A1 schlägt vor diesem Hintergrund vor, Funktionen des Automatisierungssystems durch einen Webserver einer Steuerungseinheit verfügbar zu machen. Eine Single-Page-Anwendung ist in einem Speicher der Steuerungseinheit als statische Ressource hinterlegt und wird über den Webserver der Steuerungseinheit verfügbar gemacht. Die Ausführung der Single-Page-Anwendung erfolgt hierbei ausschließlich clientseitig durch einen Webbrowser einer Bedien- und Beobachtungsstation. Die Single-Page-Anwendung greift über eine generische Datenschnittstelle des Webservers auf die grundsätzlichen Automatisierungsfunktionen und ein standardisiertes Datenmodell zu, das die Steuerungseinheit und die Daten repräsentiert, die von dieser bereitgestellt werden.

Im Rahmen der in modernen Webbrowsern implementierten Same-Origin-Policy, siehe z. B. https://developer.mozilla.org/en-US/docs/Web/Security/Same-origin_policy, besteht das Erfordernis, die Single-Page-Anwendung von derjenigen Steuervorrichtung zu laden, auf deren Datenschnittstelle im Weiteren zugegriffen werden soll.

Hierbei stellt sich jedoch weiterhin das Problem, dass eine industrielle Steuervorrichtung über wenig internen Speicher verfügt bzw. die Erweiterung dieses Speichers durch große Speicherkarten kostspielig ist, und dass eine industrielle Steuervorrichtung über wenig Rechenleistung verfügt, die für Kommunikationslast außerhalb der Kernfunktionalität der industriellen Steuervorrichtung bereitsteht. So kann der Speicherplatz für die Speicherung der Single-Page-Anwendung unzureichend sein und/oder das Laden der Single-Page-Anwendung von der Steuervorrichtung auf eine Benutzervorrichtung kann inakzeptabel lange dauern - insbesondere, wenn die Ressourcen für eine sichere Übertragung verschlüsselt werden müssen. Herkömmlich wird dieses Problem durch Hochskalierung der Hardwareressourcen der Steuervorrichtung adressiert.

Vor diesem Hintergrund besteht eine Aufgabe der vorliegenden Erfindung darin, auf effizientere Weise Zugriff auf Funktionalität in einem industriellen Automatisierungssystem zu gewähren.

Gemäß einem ersten Aspekt wird ein Verfahren zum Gewähren von Zugriff auf Funktionalität in einem industriellen Automatisierungssystem mittels einer auf einer Benutzervorrichtung ausgeführten Single-Page-Anwendung vorgeschlagen. Das Verfahren umfasst: Laden, durch die Benutzervorrichtung, eines auf einer Steuervorrichtung abgelegten ersten Datenabschnitts der Single-Page-Anwendung; Nachladen, durch die Benutzervorrichtung, einer Anzahl von in dem ersten Datenabschnitt spezifizierten weiteren für die Ausführung der Single-Page-Anwendung benötigten und auf einer externen Servervorrichtung abgelegten Datenabschnitte von der externen Servervorrichtung; und Zugreifen auf die Funktionalität der Steuervorrichtung durch die auf der Benutzervorrichtung ausgeführte Single-Page-Anwendung.

Dadurch, dass die weiteren Datenabschnitte von der externen Servervorrichtung und nicht von der Steuervorrichtung nachgeladen werden, kann vorteilhafterweise die Steuervorrichtung weiter entlastet und eine Ladezeit der Single-Page-Anwendung verkürzt werden. Auf der Steuervorrichtung werden somit vorteilhafterweise weniger Speicherplatz und weniger Rechenleistung benötigt und ein Downsizing der Steuervorrichtung kann möglich sein. Zudem brauchen in einem industriellen Automatisierungssystem mit mehreren Steuervorrichtungen diejenigen Datenabschnitte, die für alle Single-Page-Anwendungen des industriellen Automatisierungssystems identisch sind, nur einmal auf der zentralen Servervorrichtung, statt mehrfach auf mehreren Steuervorrichtungen, abgelegt zu werden, was Speicherplatz spart und die Wartung und Aktualisierung vereinfacht.

Demgegenüber wird der erste Datenabschnitt der Single-Page-Anwendung von der Steuervorrichtung geladen. Dadurch wird sichergestellt, dass als Herkunft des ersten Datenabschnitts - und damit als Herkunft der gesamten auf der Benutzervorrichtung ausgeführten Single-Page-Anwendung - die Steuervorrichtung gilt. Demgemäß greifen bei der späteren Interaktion der Single-Page-Anwendung mit der Steuervorrichtung zum Zugreifen auf deren Funktionalität keine Cross-Origin-Einschränkungen, d. h., die Anforderungen einer durch einen Webbrowser der Benutzervorrichtung implementierten Same-Origin-Policy können vorteilhafterweise gewahrt bleiben.

Der Begriff "eine Anzahl" bezeichnet vorliegend ein oder mehrere Elemente, das heißt, eine Anzahl N mit N≥1.

Die Benutzervorrichtung kann eine beliebige computerisierte Benutzervorrichtung sein, wie beispielsweise eine stationäre Workstation, ein stationärer Desktop-PC, ein portabler Laptop-PC, ein Notebook oder ein Tablet-PC.

Die externe Servervorrichtung kann eine beliebige computerisierte Servervorrichtung sein, wie beispielsweise eine stationäre Workstation, ein stationärer Server-PC, ein stationärer Industrie-PC (IPC) und dergleichen. Die externe Servervorrichtung kann auch als Cloud-Dienst, beispielsweise als private Cloud, implementiert sein. Die externe Servervorrichtung kann global von einem Hersteller der Steuervorrichtung oder site-lokal von einem Betreiber des Automatisierungssystems oder abteilungslokal von einem Betreiber der konkreten Steuervorrichtung bereitgestellt werden.

Die Steuervorrichtung ist insbesondere eine computerisierte Vorrichtung, die über eine Schnittstelle mit einem technischen Gerät des industriellen Automatisierungssystems verbunden ist und somit eine programmgesteuerte Steuerung und/oder Überwachung des technischen Geräts realisieren kann. Weiterhin ist die Steuervorrichtung insbesondere eine computerisierte Vorrichtung, die über geringere Ressourcen (insbesondere weniger Speicherplatz und/oder weniger Rechenleistung) verfügt als die externe Servervorrichtung.

Beispiele für die Steuervorrichtung sind insbesondere eine speicherprogrammierbare Steuerung (SPS, engl.: programmable logic controller, PLC), eine eingebettete Vorrichtung (engl. "embedded device"), ein Industrie-PC (IPC) und dergleichen, eine beschränkte Vorrichtung (engl. "constrained device"), auf welcher das Steuerprogramm direkt, ohne darunterliegendes Betriebssystem, ausgeführt wird, und dergleichen.

Als Single-Page-Anwendung (englisch: Single-Page Application, SPA) wird insbesondere eine Anwendung bezeichnet, deren Benutzerschnittstelle aus Sicht des Benutzers aus einem einzelnen Seitendokument, wie einem einzelnen HTML-Dokument, besteht. Eine solche Single-Page-Anwendung wird auf die Benutzervorrichtung transferiert und gelangt dort zur Ausführung, indem sie von einer Clientanwendung, wie beispielsweise einem Webbrowser oder dergleichen, interpretiert und/oder ausgeführt wird. Ein Benutzer kann mit der angezeigten Seite interagieren, ohne dass die Seite neu geladen und neu aufgebaut werden muss. Gegebenenfalls finden hierbei im Hintergrund Kommunikationen statt, um Inhalte (wie weitere Datenabschnitte) nachzuladen. Die zugehörigen Rechenoperationen werden jedoch clientseitig auf der Benutzervorrichtung ausgeführt. Der Server, von dem die Single-Page-Anwendung transferiert wurde (vorliegend die Steuervorrichtung und/oder die externe Servervorrichtung), wird hierdurch vorteilhaft entlastet.

Ein jeweiliger nachgeladener weiterer Datenabschnitt kann ein Datenabschnitt der Single-Page-Anwendung oder ein Datenabschnitt zur Verwendung durch die Single-Page-Anwendung sein.

Ein Datenabschnitt der Single-Page-Anwendung kann beispielsweise ein Programmdatenabschnitt, der interpretierbaren oder ausführbaren Programmcode umfasst, oder ein Ressourcendatenabschnitt sein, der Bilddaten, Symboldaten und dergleichen umfasst.

Ein Datenabschnitt zur Verwendung durch die Single-Page-Anwendung kann Eingabedaten oder Konfigurationsdaten für die Single-Page-Anwendung umfassen, beispielsweise Projektdaten mit Bezug auf das konkrete industrielle Automatisierungssystem oder die konkrete Steuervorrichtung.

Der erste und ggf. weitere nachgeladene Datenabschnitte der Single-Page-Anwendung bilden insbesondere zusammen die Single-Page-Anwendung, wenn sie auf der Benutzervorrichtung interpretiert und/oder ausgeführt werden.

Der erste Datenabschnitt spezifiziert hierbei beispielsweise wenigstens eine Kennung eines jeweiligen nachzuladenden Datenabschnitts, die der externen Servervorrichtung erlaubt, den gewünschten Datenabschnitt eindeutig zu identifizieren. Optional kann der erste Datenabschnitt auch eine Adresse der externen Servervorrichtung spezifizieren, von der der jeweilige Datenabschnitt nachzuladen ist. Vorzugsweise wird der nachzuladende Datenabschnitt somit beispielsweise durch einen vollständigen Uniform Resource Locator, URL, spezifiziert. Es ist jedoch alternativ auch denkbar, dass der Benutzervorrichtung die Adresse der externen Servervorrichtung bekannt ist oder diese Adresse von dem Benutzer vorgegeben wird. In diesem Fall kann der erste Datenabschnitt der Single-Page-Anwendung lediglich eine Kennung des konkret von dieser Servervorrichtung nachzuladenden Datenabschnitts spezifizieren, nicht jedoch die Adresse dieser Servervorrichtung.

Die Schritte des vorgeschlagenen Verfahrens können gesteuert durch eine Clientanwendung, wie beispielsweise einen Webbrowser oder dergleichen in Reaktion auf eine Benutzereingabe an der Benutzervorrichtung durchgeführt werden. Das heißt, ein Benutzer kann die anzusprechende Steuervorrichtung durch Eingabe einer Adresse oder aus einem vorgegebenen Menü auswählen, woraufhin die Clientanwendung den ersten Datenabschnitt der zu dieser Steuervorrichtung gehörigen Single-Page-Anwendung herunterlädt, interpretiert und die im ersten Datenabschnitt angegebenen weiteren Datenabschnitte von der externen Servervorrichtung nachlädt und interpretiert und/oder ausführt. Auf diese Weise gelangt die von den Datenabschnitten gebildete Single-Page-Anwendung zur Ausführung und dem Benutzer wird eine Benutzerschnittstelle angezeigt. In diesem Rahmen kann gesteuert durch den Programmablauf der interpretierten und/oder ausgeführten Datenabschnitte ein Zugriff auf die Funktionalität der Steuervorrichtung erfolgen, um Datenwerte abzurufen, die dem Benutzer in der Benutzerschnittstelle angezeigt werden. Ebenso kann in Reaktion auf Benutzereingaben des Benutzers in der Benutzerschnittstelle ein Zugriff auf die Funktionalität der Steuervorrichtung erfolgen, um in der Steuervorrichtung Datenwerte zu setzen, die den von der Steuervorrichtung gesteuerten Betrieb des industriellen Automatisierungssystems beeinflussen.

Gemäß einer Ausführungsform erfolgen das Laden und das Nachladen der Datenabschnitte durch Abrufen statischer Dateien von der Steuervorrichtung und von der externen Servervorrichtung.

Das heißt, die auf der Steuervorrichtung und der Servervorrichtung jeweils abgelegten Datenabschnitte sind als statische Daten abgelegt, die im Rahmen des Ladens von der Steuervorrichtung und im Rahmen des Nachladens von der externen Servervorrichtung ausgeliefert, jedoch nicht ausgeführt werden. Die Ausführung der Single-Page-Anwendung erfolgt vorteilhafterweise ausschließlich clientseitig auf der Benutzervorrichtung.

Gemäß einer weiteren Ausführungsform erfolgt das Zugreifen auf die Funktionalität der Steuervorrichtung durch API-Aufrufe an eine von der Steuervorrichtung bereitgestellte Datenschnittstelle.

Die API-Aufrufe erfolgen hierbei insbesondere durch die ausgeführte Single-Page-Anwendung.

Gegenüber dem Transfer von statischen Daten kann der Zugriff auf die Funktionalität der Steuervorrichtung durch API-Aufrufe den Vorteil einer geringeren auf der Steuervorrichtung entstehenden Verarbeitungslast bieten.

Gemäß einer weiteren Ausführungsform sind die weiteren Datenabschnitte auch auf der Steuervorrichtung abgelegt, und im Falle einer Nichtverfügbarkeit der externen Servervorrichtung erfolgt das Nachladen der weiteren benötigten Datenabschnitte von der Steuervorrichtung anstelle der externen Servervorrichtung.

Somit kann vorteilhafterweise Redundanz bereitgestellt werden. Solange die externe Servervorrichtung per Netzwerk erreichbar ist, können zur Erlangung der technischen Vorteile einer geringeren Belastung der Steuervorrichtung, und damit verbunden einer höheren Reaktionsgeschwindigkeit für den Benutzer, die weiteren Datenabschnitte von der Servervorrichtung nachgeladen werden. Das System zum Zugreifen auf die Funktionalität des industriellen Automatisierungssystems bleibt jedoch auch dann - wenn auch mit verminderter Leistung - funktionsfähig, wenn die Verbindung zu der externen Servervorrichtung ausfällt.

Gemäß einer weiteren Ausführungsform umfasst der erste von der Steuervorrichtung an die Benutzerdatenvorrichtung übertragene Datenabschnitt der Single-Page-Anwendung eine Index-Seite.

Die Index-Seite kann beispielsweise eine HTML-Indexdatei (index.htm, index.html) sein, in der über Links und Includes die weiteren nachzuladenden Datenabschnitte spezifiziert sind.

Eine derartige Index-Seite kann das notwendige Minimum an Daten darstellen, die benötigt wird, um den Nachladevorgang der weiteren Datenabschnitte der Single-Page-Anwendung zu spezifizieren.

Gemäß einer weiteren Ausführungsform werden von der Steuervorrichtung ausschließlich die Index-Seite und keine sonstigen von der Single-Page-Anwendung benötigten Datenabschnitte geladen.

Demgemäß wird vorteilhafterweise lediglich ein Minimum an (statischen) Daten von der Steuervorrichtung geladen, und das mögliche Maximum an externalisierbaren Daten wird nicht von der Steuervorrichtung geladen, sondern von der externen Servervorrichtung nachgeladen. Somit wird vorteilhafterweise eine Belastung der Steuervorrichtung minimiert.

Gemäß einer weiteren Ausführungsform umfasst die Anzahl von der externen Servervorrichtung nachgeladener Datenabschnitte einen Programmcodeabschnitt und/oder einen Ressourcenabschnitt der Single-Page-Anwendung.

Bei dem Programmcodeabschnitt handelt es sich insbesondere um Daten, die von der Clientanwendung, wie dem Webbrowser, interpretiert und/oder zur Ausführung gebracht werden können, um die Single-Page-Webanwendung auszuführen.

Der Programmcodeabschnitt kann beispielsweise Javascript-Code, WebAssembly-Code und dergleichen umfassen.

Bei dem Ressourcenabschnitt kann es sich um statische Daten handeln, die von der ausgeführten Single-Page-Anwendung benötigt werden, beispielsweise um Grafikdaten, Bilddaten, Symboldaten und dergleichen.

Gemäß einer weiteren Ausführungsform umfasst die Anzahl von der externen Servervorrichtung nachgeladener Datenabschnitte einen generischen Projektdatenabschnitt zur Verwendung durch die Single-Page-Anwendung.

Unter Projektdaten sind vorliegend Daten zu verstehen, die auf eine konkrete Installation (ein Projekt), das heißt, auf das konkrete industrielle Automatisierungssystem und/oder auf die konkrete Steuervorrichtung abgestimmt wurden. Solche Projektdaten sind insbesondere Ergebnis eines Engineering-Schritts. Bei generischen Projektdaten (den Daten in dem generischen Projektdatenabschnitt) handelt es sich insbesondere um Projektdaten, die sich nicht auf eine konkrete Steuervorrichtung beziehen, sondern von mehreren oder allen der Steuervorrichtungen des industriellen Automatisierungssystems geteilt werden. Ein Beispiel für derartige Projektdaten ist eine Beschreibung des in der EP 3 438 774 A1 beschriebenen generischen Datenmodells, auf das hiermit ausdrücklich Bezug genommen wird.

Solche generischen Projektdaten können an jede der Steuervorrichtungen des Automatisierungssystems ausgeliefert werden, demgemäß ist vorteilhafterweise keine besondere Identifizierung, Authentifizierung oder Autorisierung der Benutzervorrichtung bzw. der Steuervorrichtung bei der externen Servervorrichtung erforderlich, um den generischen Projektdatenabschnitt beziehen zu können.

Gemäß einer weiteren Ausführungsform umfasst die Anzahl von der externen Servervorrichtung nachgeladener Datenabschnitte einen für die Steuervorrichtung spezifischen Projektdatenabschnitt zur Verwendung durch die Single-Page-Anwendung.

Demgemäß könnten auch für die Steuervorrichtung spezifische Daten, beispielsweise Informationen zu besonderen Konfigurationsoptionen derselben, die nicht von den generischen Projektdaten umfasst sind, auf die externe Servervorrichtung externalisiert werden. Hierzu kann beispielsweise die Benutzervorrichtung bzw. die darauf ausgeführte Single-Page-Anwendung zum Nachladen des für die Steuervorrichtung spezifischen Projektdatenabschnitts eine Kennung der Steuervorrichtung und/oder eine Kennung eines spezifischen Projekts an die externe Servervorrichtung übermitteln, um der externen Servervorrichtung die Identifizierung des zu übermittelnden spezifischen Projektdatenabschnitts zu ermöglichen.

Gemäß einer weiteren Ausführungsform wird die Benutzervorrichtung zum Nachladen der Datenabschnitte von der externen Servervorrichtung authentifiziert und autorisiert.

Beispielsweise, aber nicht notwendigerweise, können die Steuervorrichtung und die externe Servervorrichtung ein gemeinsames Authentifizierungsverfahren mit Single-Sign-on-Eigenschaften (SSO, wie beispielsweise OAuth 2.0) unterstützen. In diesem Falle wird die Benutzervorrichtung 2 über die Single-Sign-on-Mechanismen authentifiziert und autorisiert, die Kennung der Steuervorrichtung und/oder die Kennung des spezifischen Projekts an die externe Servervorrichtung übermittelt.

Auf diese Weise werden betriebsrelevante Daten vorteilhafterweise vor unbefugtem Zugriff geschützt.

Gemäß einer weiteren Ausführungsform wird bei dem Authentifizieren und Autorisieren der Single-Page-Anwendung eine Vertrauensbeziehung zwischen der Steuervorrichtung der externen Servervorrichtung validiert.

Beispielsweise kann ein an TLS angelehnter Handshake zwischen Steuerung und externem Server durchgeführt werden, der durch die Benutzervorrichtung zwischen Steuervorrichtung und Servervorrichtung getunnelt wird.

Demgemäß kann vorteilhafterweise sichergestellt werden, dass ein jeweiliger für die Steuervorrichtung spezifischer Projektdatenabschnitt nur an diejenige Steuervorrichtung (nur an eine Single-Page-Anwendung, die auf diejenige Steuervorrichtung zugreift) ausgeliefert wird, für die der spezifische Projektdatenabschnitt bestimmt ist. Dies ist sowohl unter Aspekten der funktionalen Sicherheit (engl. "safety", Vermeidung von Fehlkonfigurationen und Fehlfunktionen) als auch der IT-Sicherheit (engl. "security", Gewährleistung von Vertraulichkeit der Projektdaten und Vermeidung von böswilligen Manipulationen der Projektdaten) vorteilhaft.

Gemäß einer weiteren Ausführungsform übermittelt die externe Servervorrichtung einen Nonce-Wert an die Benutzervorrichtung, die Benutzervorrichtung übermittelt den Nonce-Wert an die Steuervorrichtung, die Steuervorrichtung erzeugt mittels eines mit der externen Steuervorrichtung geteilten gemeinsamen Geheimnisses eine Antwort auf Basis des Nonce-Werts und übermittelt die Antwort an die Benutzervorrichtung, die Benutzervorrichtung übermittelt die Antwort an die externe Servervorrichtung, und die externe Servervorrichtung validiert die Vertrauensbeziehung zwischen der Steuervorrichtung und der externen Servervorrichtung anhand der übermittelten Antwort.

Der Nonce-Wert kann auch als Challenge bezeichnet werden, und die basierend auf Nonce-Wert und gemeinsamem Geheimnis erstellte Antwort kann auch als Response auf die Challenge aufgefasst werden.

Demgemäß ist vorteilhafterweise ein einfaches, ressourcensparendes Verfahren zum Verifizieren der Vertrauensbeziehung zwischen Steuervorrichtung und externer Servervorrichtung angegeben. Das Verfahren kommt ohne komplexe Logik und Infrastruktur für Single-Sign-on, Zertifikatverwaltung und dergleichen aus und ist gleichzeitig gegen Mithören auf dem Übertragungsweg geschützt.

Gemäß einer weiteren Ausführungsform wird die Single-Page-Anwendung ausschließlich clientseitig auf der Benutzervorrichtung ausgeführt.

Das heißt, auf der Steuervorrichtung können einerseits das eigentliche Steuerprogramm der Steuervorrichtung und andererseits eine Serveranwendung ausgeführt werden. Letztere überträgt auf Anfrage durch die Benutzervorrichtung den statisch auf der Steuervorrichtung abgelegten ersten Datenabschnitt der Single-Page-Anwendung an die Benutzervorrichtung, optional nachdem sich die Benutzervorrichtung bei der Serveranwendung authentifiziert hat und autorisiert wurde. Darüber hinaus werden jedoch vorzugsweise keine weiteren Programmabläufe, insbesondere keine Programmabläufe der Single-Page-Anwendung, auf der Steuervorrichtung ausgeführt. Somit kann die Steuervorrichtung vorteilhafterweise ressourcensparend betrieben werden, und ein Downsizing der Steuervorrichtung wird begünstigt.

Jede Ausführungsform des ersten Aspekts kann mit jeder anderen Ausführungsform des ersten Aspekts kombiniert werden, um eine weitere Ausführungsform des ersten Aspekts zu erhalten.

Gemäß einem zweiten Aspekt wird ein Computerprogrammprodukt vorgeschlagen, umfassend Befehle, die bei der Ausführung des Programms durch einen Computer diesen veranlassen, das Verfahren des ersten Aspekts oder einer seiner Ausführungsformen auszuführen, wobei das Computerprogrammprodukt einen ersten Datenabschnitt, der zur Ablage auf der Steuervorrichtung vorgesehen ist, und mindestens einen weiteren Datenabschnitt umfasst, der zur Ablage auf der externen Servervorrichtung vorgesehen ist.

Die Datenabschnitte des Computerprogrammprodukts können beispielsweise als Speichermedium, wie z. B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem entsprechenden Datenabschnitt erfolgen.

Gemäß einem dritten Aspekt wird ein industrielles Automatisierungssystem vorgeschlagen, aufweisend eine Steuervorrichtung, eine Benutzervorrichtung und eine externe Servervorrichtung, wobei auf der Steuervorrichtung ein erster Datenabschnitt einer Single-Page-Anwendung abgelegt ist, eine Anzahl von in dem ersten Datenabschnitt spezifizierten weiteren für die Ausführung der Single-Page-Anwendung benötigte Datenabschnitte auf der externen Servervorrichtung abgelegt ist, und die Benutzervorrichtung dazu eingerichtet ist, auf die Funktionalität der Steuervorrichtung zuzugreifen durch: Laden des auf der Steuervorrichtung abgelegten ersten Datenabschnitts; Nachladen der weiteren benötigten Datenabschnitte von der externen Servervorrichtung; und Ausführen der Single-Page-Anwendung, um auf die Funktionalität der Steuervorrichtung zuzugreifen.

Die für das vorgeschlagene Verfahrenen beschriebenen Ausführungsformen, Merkmale und Vorteile gelten für das vorgeschlagene industrielle Automatisierungssystem und für das vorgeschlagene Computerprogrammprodukt entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung.

Im Weiteren wird die Erfindung anhand von bevorzugten Ausführungsformen unter Bezugnahme auf die beigelegten Figuren näher erläutert.
Fig. 1 veranschaulicht ein industrielles Automatisierungssystem und Verfahrensschritte gemäß einem ersten Ausführungsbeispiel.
Fig. 2 veranschaulicht Schritte eines Verfahrens zum Gewähren von Zugriff auf Funktionalität des industriellen Automatisierungssystems gemäß Ausführungsbeispielen.
Fig. 3 veranschaulicht ein industrielles Automatisierungssystem gemäß einem zweiten Ausführungsbeispiel.
Fig. 4 veranschaulicht ein industrielles Automatisierungssystem gemäß einem dritten Ausführungsbeispiel.
Fig. 5 veranschaulicht ein industrielles Automatisierungssystem gemäß der Weiterbildung des dritten Ausführungsbeispiels beim Durchführen einer Authentifizierung und Autorisierung der Benutzervorrichtung.

In den Figuren sind gleiche oder funktionsgleiche Elemente mit denselben Bezugszeichen versehen worden, sofern nichts anderes angegeben ist.

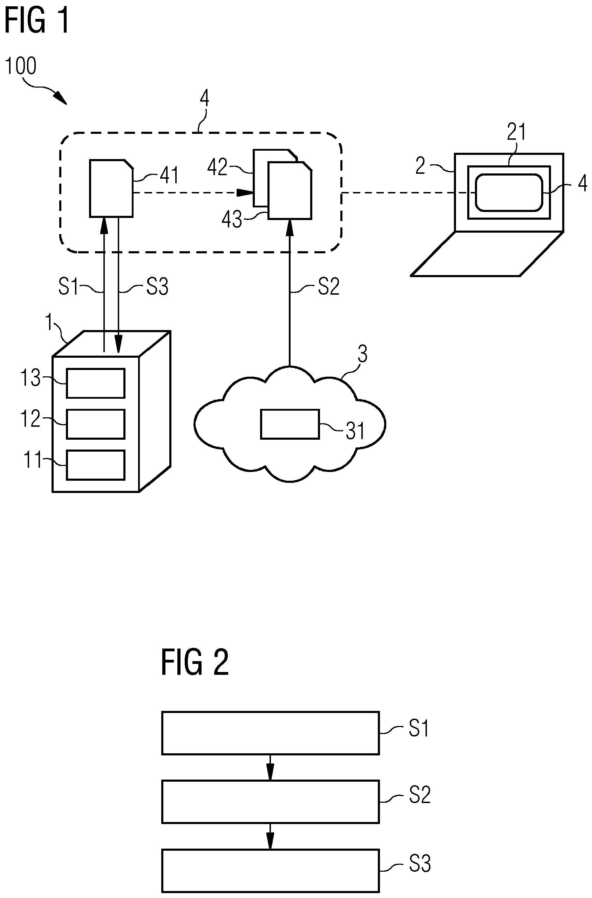

Fig. 1 zeigt ein industrielles Automatisierungssystem 100 gemäß dem ersten Ausführungsbeispiel. Schritte S1-S3 eines Verfahrens zum Gewähren von Zugriff auf Funktionalität des industriellen Automatisierungssystems sind in Fig. 1 und Fig. 2 veranschaulicht. Es wird auf Fig.1 und Fig. 2 Bezug genommen.

Das industrielle Automatisierungssystem 100 weist eine Steuervorrichtung 1, eine Benutzervorrichtung 2 und eine - in Bezug auf die Steuervorrichtung 1 und in Bezug auf die Benutzervorrichtung 2 externe - Servervorrichtung 3 auf, die über ein Datennetzwerk, wie beispielsweise ein kabelgebundenes oder ein kabelloses LAN, WAN, VLAN oder dergleichen, miteinander kommunikationsverbunden sind.

Bei der Steuervorrichtung 1 des vorliegenden Ausführungsbeispiels handelt es sich beispielsweise um eine speicherprogrammierbare Steuerung (SPS, engl. "PLC"). Im Weiteren wird daher ohne Beschränkung der Allgemeinheit von einer SPS 1 gesprochen.

Die SPS 1 ist mit einem technischen Gerät (nicht gezeigt) oder einer technischen Anlage (nicht gezeigt) verbunden und führt insbesondere ein automatisches Steuerprogramm 11 aus. Gesteuert von dem automatischen Steuerprogramm 11 sendet die SPS 1 über eine nicht gezeigte Schnittstelle Signale an das technische Gerät und empfängt Signale von diesem und verarbeitet diese, und steuert und überwacht auf diese Weise dessen betriebliche Funktionalität.

Die SPS 1 weist eine Datenschnittstelle 12 auf, über die auf programmtechnische Weise Datenelemente des Steuerprogramms 11 gelesen und geschrieben werden können. Bei solchen Datenelementen kann es sich beispielsweise um Messwerte, welche empfangenen Signalen entsprechen, oder um Stellpunktwertwerte, die zu sendende Signale beschreiben, oder um Konfigurationsdaten für das Steuerprogramm 11 oder dergleichen handeln. Durch Lesen und Schreiben von Daten mithilfe der Datenschnittstelle 12 kann Funktionalität des industriellen Automatisierungssystems 100, und im speziellen Funktionalität der SPS 1, überwacht und gesteuert werden.

Auf der Benutzervorrichtung 2 ist eine Clientanwendung 21, im vorliegenden Beispiel ein Webbrowser, installiert. Ein Benutzer, der auf Funktionalität der Steuervorrichtung 1 in dem industriellen Automatisierungssystem 100 zugreifen möchte, gibt eine Adresse, wie beispielsweise eine IP-Adresse oder einen Hostnamen, der Steuervorrichtung 1 in den Webbrowser 21 ein oder wählt die Adresse aus einem vordefinierten Menü aus. Damit beginnt das Verfahren zum Gewähren von Zugriff auf die Funktionalität der Steuervorrichtung 1 bei Schritt S1.

In Schritt S1 bezieht die Benutzervorrichtung 2 einen ersten Datenabschnitt 41 einer Single-Page-Anwendung 4 von der SPS 1. Dazu baut der Webbrowser 21 eine Verbindung, wie beispielsweise eine http-Verbindung, mit einer Serveranwendung 13, im vorliegenden Beispiel einem Webserver, auf, die auf der SPS 1 ausgeführt wird. Der erste Datenabschnitt 41 der Single-Page-Anwendung 4 ist auf der SPS 1 abgelegt, und es handelt sich beispielsweise um eine index.htm-Datei, die interpretierbaren HTML-Code umfasst. In Reaktion auf eine entsprechende Anfrage des Webbrowsers 21 überträgt der Webserver 13 den ersten Datenabschnitt 41 (genauer gesagt, eine Kopie davon) der Single-Page-Anwendung 4 an den Webbrowser 21 der Benutzervorrichtung 2. Der Webbrowser 21 beginnt damit, den HTML-Code aus dem ersten Datenabschnitt 41 zu interpretieren, wodurch die Single-Page-Anwendung 4 auf der Benutzervorrichtung 2 zur Ausführung gelangt und innerhalb des Webbrowsers 21 eine Seite dargestellt wird oder zumindest mit der Darstellung der einen Seite begonnen wird.

In Reaktion auf eine Benutzerinteraktion mit der in dem Webbrowser 21 dargestellten Seite der Single-Page-Anwendung 4 und/oder in Reaktion auf einem beim Interpretieren des ersten Datenabschnitts 41 interpretierten Programmbefehl der Single-Page-Anwendung 4 trifft der Webbrowser 21 beim Interpretieren der Single-Page-Anwendung 4 auf eine Referenz auf einen oder mehrere weitere für die Fortsetzung des Programmablaufs benötigte Datenabschnitte 42, 43. Die Referenz ist in Fig. 1 durch einen gestrichelten Pfeil von dem Datenabschnitt 41 zu den weiteren Datenabschnitten 42, 43 angedeutet. Zum Auflösen dieser Referenz geht das Verfahren zu Schritt S2 über.

In Schritt S2 lädt der Webbrowser 21 gemäß der Referenz einen jeweiligen weiteren benötigten Datenabschnitt 42, 43 der Single-Page-Anwendung 4 von der externen Servervorrichtung 3 nach. Die Adresse der externen Servervorrichtung 3 wird hierbei entweder von der in dem ersten Datenabschnitt 41 enthaltenen Referenz spezifiziert oder kann in dem Webbrowser 21 vorkonfiguriert sein oder kann von dem Benutzer eingegeben werden oder eingegeben worden sein. Mindestens eine Kennung des nachzuladenden weiteren benötigten Datenabschnitts 42, 43 ist jedoch in der in dem ersten Datenabschnitt 41 enthaltenen Referenz umfasst.

Das Nachladen des jeweiligen weiteren benötigten Datenabschnitts 42, 43 in Schritt S2 erfolgt hierbei auf eine gleichartige Weise wie das Laden des ersten Datenabschnitts 41, lediglich mit der Maßgabe, dass ein auf der externen Servervorrichtung 3 ausgeführter Webserver 31 anstelle des Webservers 13 der SPS 1 als Kommunikationspartner dient. Das heißt, die weiteren benötigten Datenabschnitte 42, 43 sind insbesondere als statische Datenabschnitte auf der externen Servervorrichtung 3 abgelegt und werden von dort lediglich abgerufen, kommen jedoch nicht aus der Servervorrichtung 3 zur Ausführung.

Bei einem weiteren benötigten Datenabschnitt 42 kann es sich beispielsweise um einen Programmdatenabschnitt 42 handeln, der Javascript-Code, WebAssembly-Code, weiteren HTML-Code oder dergleichen umfasst, welcher von dem Webbrowser 21 auf der Benutzereinrichtung 2 interpretiert wird oder zur Ausführung gebracht wird. Bei einem weiteren benötigten Datenabschnitt 42 kann es sich beispielsweise auch um einen Ressourcendatenabschnitt 43 enthalten, der Bild- und Symboldaten und dergleichen umfasst, welche der Webbrowser 21 zur Darstellung der Single-Page-Anwendung 4 auf der Benutzervorrichtung 2 benötigt, und welche von dem Code aus dem Programmdatenabschnitt 42 oder dem ersten Datenabschnitt 41 referenziert werden.

In Reaktion auf eine Benutzerinteraktion mit der in dem Webbrowser 21 dargestellten Seite der Single-Page-Anwendung 4 und/oder in Reaktion auf einem beim Interpretieren des ersten Datenabschnitts 41 interpretierten Programmbefehl der Single-Page-Anwendung 4 und/oder in Reaktion auf einen beim Interpretieren oder Ausführen des weiteren Programmdatenabschnitts 42 interpretierten oder ausgeführten Programmbefehl der Single-Page-Anwendung 4 greift die Single-Page-Anwendung 4 sodann in Schritt S3 auf eine Funktionalität der SPS 1 zu.

Insbesondere kann die Single-Page-Anwendung 4 in Schritt S3 einen API-Aufruf der Datenschnittstelle 12 ausführen, der von dem Webserver 13 vermittelt wird. Mit dem API-Aufruf werden Daten des Steuerprogramms 11 ausgelesen oder geschrieben, Befehle an das Steuerprogramm 11 übermittelt, Backups oder Aktualisierungen des Steuerprogramms 11 durchgeführt oder dergleichen, und auf diesem Wege wird auf die Funktionalität des industriellen Automatisierungssystems 100 zugegriffen.

Das geschilderte Verfahren, mit dem von der Benutzervorrichtung 2 auf die von der Steuervorrichtung 1 gesteuerte Funktionalität des industriellen Automatisierungssystems 100 zugegriffen wird, bietet insbesondere die folgenden Vorteile:
Dadurch, dass die überwiegende Anzahl der Datenabschnitte 42, 43 der Single-Page-Anwendung 4 auf der externen Servervorrichtung 1 abgelegt sind und von dort nachgeladen werden, wird auf der SPS 1 (beispielsweise auf einer in diese eingelegten Speicherkarte oder dergleichen) kaum Speicherplatz belegt. Der erste Datenabschnitt 41, der auf der SPS 1 abgelegt ist, kann in einer bevorzugten Variante, in der er lediglich die Index-Seite und keine sonstigen von der Single-Page-Anwendung 4 benötigten Datenabschnitte umfasst, eine Größe von weniger als 1024 Bytes aufweisen.

Dementsprechend wird zum Übertragen von Daten von der SPS 1 an die Benutzervorrichtung 2 auch nur eine geringe Verarbeitungslast auf der SPS 1 erzeugt; dies ist insbesondere dann relevant, wenn die Übertragung der Datenabschnitte 41-43 der Single-Page-Anwendung 4 verschlüsselt erfolgen soll. Das heißt, die CPU-Belastung, die Speicherplatzbelegung und die Kommunikationslast, die für das Speichern, Übertragen und ggf. Verschlüsseln der Datenabschnitte 42, 43 anfallen, werden größtenteils von der SPS 1 abgezogen und an die externe Servervorrichtung 3 externalisiert. Somit können in dem industriellen Automatisierungssystem 100 eine Vielzahl schlanker und kostengünstiger SPS 1 zum Einsatz kommen und es braucht nur eine einzelne externe Servervorrichtung 3 mit ausreichendem Speicherplatz und ausreichender Rechenleistung zum Bereitstellen der Hauptlast von Single-Page-Anwendungen 4 für die jeweiligen SPS 1 bereitgestellt zu werden.

Einer vollständigen Entlastung der SPS 1 von derartigen Web-Serving-Aufgaben steht im Wege, dass moderne Webbrowser 21 über Sicherheitsmechanismen gegen Cross-Site-Scripting (XSS) oder Cross-Site-Request-Forgery (CSRF) verfügen, welche das Durchführen von API-Aufrufen durch eine Single-Page-Anwendung 4 an eine Einrichtung unterbindet, die sich von der Einrichtung unterscheidet, von welcher die Single-Page-Anwendung 4 bezogen wurde. Solche Sicherheitsmechanismen können zwar durch serverseitiges explizites Cross-Original-Resource-Sharing (CORS) außer Kraft gesetzt werden, was wiederum eine Belastung der SPS 1 und weiteren Aufwand generieren würde.

Das Verfahren des ersten Ausführungsbeispiels adressiert diese Problematik dadurch, dass der erste Datenabschnitt 41 der Single-Page-Anwendung 4 in Schritt S1 von der SPS 1 geladen wird und erst die weiteren Datenabschnitte 42, 43 in Schritt S2 von der externen Servervorrichtung 3 nachgeladen werden. Bei dieser Vorgehensweise gilt die SPS 1 als Herkunft (Origin) der Single-Page-Anwendung 4 und der in Schritt S3 erfolgende API-Aufruf an die Datenschnittstelle 12 der SPS 1 wird von einer von dem Webbrowser 21 implementierten Same-Origin-Policy somit nicht unterbunden.

Somit kann die Entlastung der SPS 1 und die damit verbundene Effizienzsteigerung beim Zugriff auf deren Funktionalität vorteilhafterweise auf eine praktische und benutzerfreundliche Weise mit minimalem Administrationsaufwand, insbesondere ohne aufwendige Sonderkonfiguration der Benutzervorrichtungen 2 und/oder der Steuerungsvorrichtungen 1, erfolgen.

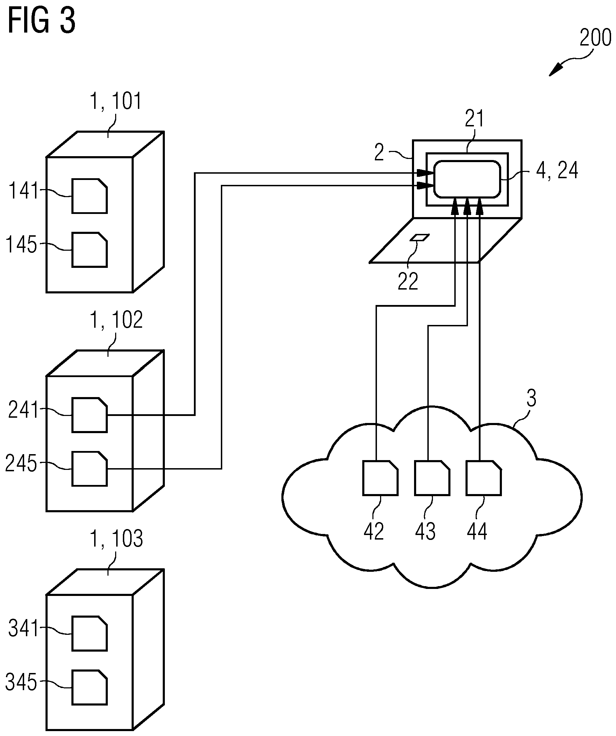

Fig. 3 veranschaulicht ein industrielles Automatisierungssystem 200 gemäß einem zweiten Ausführungsbeispiel. Das zweite Ausführungsbeispiel beruht auf dem ersten Ausführungsbeispiel, und die Beschreibung konzentriert sich auf die Unterschiede.

Das industrielle Automatisierungssystem 200 des zweiten Ausführungsbeispiels weist mehrere SPS 101, 102, 103, jedoch wie das erste Ausführungsbeispiel nur eine externe Steuervorrichtung 3 auf. Es sei angemerkt, dass jede der SPS 101, 102, 103 funktionale Einheiten aufweist, die den funktionalen Einheiten der SPS 1 aus Fig. 1 (Steuerprogramm 11, die Datenschnittstelle 12, die Serveranwendung 13 aus Fig. 1 der SPS 1 aus Fig.1) entsprechen, diese sind jedoch in Fig. 3 nicht dargestellt. In Fig. 3 sind stattdessen für jede der SPS 101-103 die darin abgelegten Datenabschnitte dargestellt.

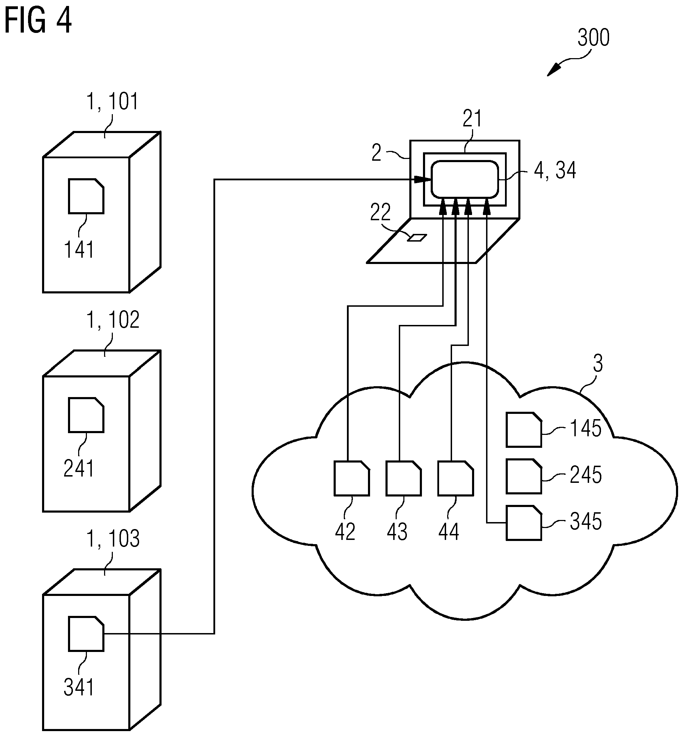

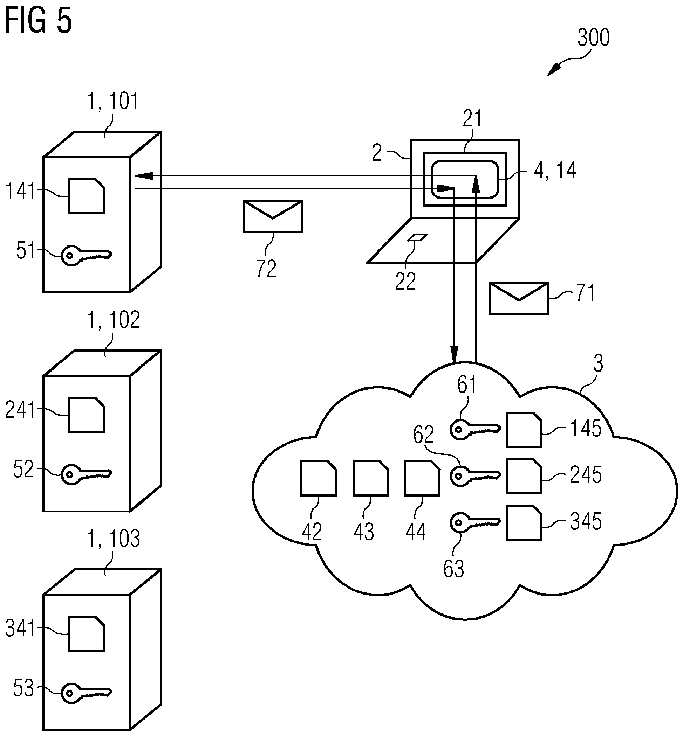

So ist in SPS 101 ein erster Datenabschnitt 141 einer Single-Page-Anwendung 4, 14 (Fig. 5) zum Zugreifen auf die Funktionalität der SPS 101 und ein für die SPS 101 spezifischer weiterer Projektdatenabschnitt 145 zur Verwendung durch die Single-Page-Anwendung 14 (Fig. 5) abgelegt. Entsprechend sind in den weiteren SPS 102, 103 jeweilige erste Datenabschnitte 241, 341 entsprechender Single-Page-Anwendungen 4, 24, 34 (Fig. 4) zum Zugreifen auf die Funktionalität der jeweiligen SPS 102, 103 und ein jeweiliger für die jeweilige SPS 102, 103 spezifischer weiterer Projektdatenabschnitt 245, 345 abgelegt.

Bei dem jeweiligen spezifischen Projektdatenabschnitt 145, 245, 345 handelt es sich um projektspezifische Daten der jeweiligen SPS 101-103, die die projektspezifische Funktionalität der konkreten SPS 101-103 betreffen und demgemäß von der zugehörigen Single-Page-Anwendung 4 bei der Ausführung benötigt werden.

Die externe Servervorrichtung 3 des zweiten Ausführungsbeispiels weist wie im ersten Ausführungsbeispiel einen Webserver 31 (Fig. 1) auf, von dem die weiteren Datenabschnitte, insbesondere der Programmcodeabschnitt 42 und der Ressourcendatenabschnitt 43 sowie ein generischer Projektdatenabschnitt 44 nachgeladen werden. Die auf der externen Servervorrichtung 3 abgelegten weiteren Datenabschnitte 42-44 sind generische Datenabschnitte, das heißt, sie werden von jeder der Single-Page-Anwendungen 4 gleichermaßen benötigt und nachgeladen.

Es wird auf Fig. 3 und Fig. 2 Bezug genommen. Das Verfahren mit den Schritten S1-S3 gleicht dem Verfahren des ersten Ausführungsbeispiels. Jedoch wählt in Schritt S1 der Benutzer zunächst eine der SPS 101-103 aus. Es wird nun davon ausgegangen, dass die SPS 102 ausgewählt wird und dieser Fall beschrieben. Dementsprechend ist in Fig. 2 die Single-Page-Anwendung 24 veranschaulicht. Die Beschreibung gilt jedoch für die anderen SPS 101-103 und deren zugehörige Single-Page-Anwendungen 4 entsprechend. Basierend auf der Auswahl lädt die Clientanwendung 21 der Benutzervorrichtung 2 von der ausgewählten SPS 102 sowohl den ersten Datenabschnitt 241 als auch den für die SPS 102 spezifischen Projektdatenabschnitt 245. In Schritt S2 lädt die Clientanwendung 21 der Benutzervorrichtung 2 sodann von der externen Servervorrichtung 3 den Programmdatenabschnitt 42, den Ressourcendatenabschnitt 43 und den generischen Projektdatenabschnitt 44 nach. Der Programmdatenabschnitt 42, der Ressourcendatenabschnitt 43 und der Projektdatenabschnitt 44 werden in einem flüchtigen Zwischenspeicher oder Cache 22 der Benutzervorrichtung 2 zwischengespeichert. In Schritt S3 greift die auf der Benutzervorrichtung 2 ausgeführte Singe-Page-Anwendung 24, die durch den ersten Datenabschnitt 241, den Programmdatenabschnitt 42 und den Ressourcendatenabschnitt 43 gebildet ist und die bei ihrer Ausführung den für die SPS 102 spezifischen Projektdatenabschnitt 245 und den generischen Projektdatenabschnitt 44 verwendet, auf die Funktionalität der SPS 102 des industriellen Automatisierungssystems 200 zu.

Wenn der Benutzer sodann auf eine andere SPS, beispielsweise die SPS 103 zugreifen möchte, wird grundsätzlich das soeben beschriebene Verfahren erneut durchgeführt. Das heißt, in Schritt S1 lädt die Clientanwendung 21 der Benutzervorrichtung 2 den ersten Datenabschnitt 341 der Single-Page-Anwendung 4, 34 (Fig. 4) und den für die SPS 103 spezifischen Projektdatenabschnitt 345 zur Verwendung durch die Clientanwendung 34 von der SPS 103. Jedoch brauchen in diesem Fall in Schritt S2 der Programmdatenabschnitt 42, der Ressourcendatenabschnitt 43 und der generische Projektdatenabschnitt 44 nicht erneut von der externen Servervorrichtung 3 nachgeladen werden, sondern können vorteilhafterweise dem Cache 22 entnommen werden. Das Caching greift und kann vorteilhafterweise für eine noch höhere Effizienz sorgen, da die Herkunft und die Identität des Programmdatenabschnitts 42, des Ressourcendatenabschnitts 43 und des generischen Projektdatenabschnitts 44, die zentralisiert auf der externen Servervorrichtung 3 abgelegt sind, beim wiederholten Durchführen von Schritt S2 mit einer anderen SPS 103 dieselben sind wie beim vorherigen Durchführen von Schritt S2 mit der vorherigen SPS 102, wo dieselbeben Datenabschnitte 42, 43, 44 von derselben Servervorrichtung 3 bezogen worden waren.

Wenn ein Anbieter, wie beispielsweise ein Betreiber des industriellen Automatisierungssystems 200, oder ein Softwareanbieter, der die Single-Page-Anwendungen 4 entwickelt, die Single-Page-Anwendungen 4 aktualisieren möchte, kann der Anbieter beispielsweise den Programmdatenabschnitt 42 und den Ressourcendatenabschnitt 43 zentral auf der externen Servervorrichtung 3 aktualisieren, ohne dass eine Notwendigkeit besteht, jede einzelne der SPS 101-103 zu aktualisieren. Aus Benutzersicht wird dennoch durch eine solche einmalige zentrale Aktualisierung jede einzelne Single-Page-Anwendung 4 bzw. 14 (Fig. 5), 24, 34 (Fig. 4) jeder der SPS 101-103 aktualisiert.

Demgemäß wird deutlich, dass gemäß dem zweiten Ausführungsbeispiel durch das Externalisieren des Programmdatenabschnitts 42, des Ressourcendatenabschnitts 43 und des generischen Projektdatenabschnitts 44 die Vorteile einer Leistungssteigerung durch Caching und eine Vereinfachung des Aktualisierens der Single-Page-Anwendungen 4 einer Mehrzahl von SPS 101, 102, 103 erzielt werden können.

Fig. 4 veranschaulicht ein industrielles Automatisierungssystem 300 gemäß einem dritten Ausführungsbeispiel. Das zweite Ausführungsbeispiel beruht auf dem ersten und zweiten Ausführungsbeispiel, und die Beschreibung konzentriert sich auf die Unterschiede. Die Beschreibung erfolgt am Beispiel des Zugreifens auf eine Funktionalität der dritten SPS 103 durch Ausführen einer Single-Page-Anwendung 34, gilt aber entsprechend auch für die anderen SPS 101, 102 und die zugehörigen Single-Page-Anwendungen 14 (Fig. 5) und 24 (Fig. 3).

Gemäß dem dritten Ausführungsbeispiel sind auch die für die jeweiligen SPS 101, 102, 103 spezifischen Projektdatenabschnitte 145, 245, 345 auf der externen Servervorrichtung 3 abgelegt. Hierdurch wird vorteilhafterweise noch weniger Speicherplatz auf jeder der SPS 101, 102, 103 benötigt, und die zentrale Aktualisierbarkeit ist weiter verbessert, da nun sogar die für die SPS 101, 102, 103 spezifischen Projektdatenabschnitte 145, 245, 345 zentral auf der externen Servervorrichtung 3 aktualisiert werden können.

Es wird auf Fig. 4 und Fig. 2 Bezug genommen. Das Verfahren mit den Schritten S1-S3 gleicht dem Verfahren des ersten und zweiten Ausführungsbeispiels. Jedoch stellt in Schritt S2 die Benutzervorrichtung 2 der externen Servervorrichtung 3 eine Kennung der in Schritt S1 ausgewählten Steuervorrichtung 101-103, z. B. SPS 103, bereit. Anhand der Kennung der SPS 103 wählt die Servervorrichtung 3 den zu der SPS 103 passenden spezifischen Projektdatenabschnitt 345 aus den spezifischen Projektdatenabschnitten 145, 245, 345 der Servervorrichtung 3 aus, so dass in Schritt S2 der korrekte spezifische Projektdatenabschnitt 345 nachgeladen werden kann.

Hierbei kann es aus Gründen der funktionalen Sicherheit ebenso wie aus Gründen der IT-Sicherheit und Vertraulichkeit wünschenswert sein, dass die auf der Benutzervorrichtung 2 ausgeführte Single-Page-Anwendung 34 zum Nachladen der Datenabschnitte 42, 43, 44, 345 bei der externen Servervorrichtung 3 authentifiziert und von dieser autorisiert wird. Im Rahmen dieser Authentifizierung und Autorisierung kann insbesondere eine Vertrauensbeziehung zwischen der SPS 103, auf die die Single-Page-Anwendung 34 zugreift, und der externen Servervorrichtung 3 validiert werden.

Sofern der Webserver (13 in Fig. 1) der jeweiligen SPS 101-103 und der Webserver (31 in Fig. 1) der externen Servervorrichtung 3 ein gemeinsames Authentifizierungsverfahren mit Single-Sign-on-Eigenschaften, wie etwa OAuth 2.0, unterstützen, genügt es, wenn sich der Benutzer mit dem Webbrowser 21 einmalig bei einer zentralen Stelle (nicht gezeigt) authentifiziert und dabei ein Single-Sign-on-Token erhält. Die jeweilige Single-Page-Anwendung 4 kann sodann anhand dieses Single-Sign-on-Tokens durch den jeweiligen Webserver der SPS 101-103 und der externen Servervorrichtung 3 authentifiziert und autorisiert werden.

Es wird jedoch vorzugsweise ein schlankeres Verfahren zum Authentifizierten und Autorisieren der Benutzervorrichtung 2 sowie zum Validieren der Vertrauensbeziehung zwischen der SPS 101-103 und der externen Servervorrichtung 3 vorgeschlagen, das im Folgenden skizziert wird.

Fig. 5 veranschaulicht das industrielles Automatisierungssystem 300 beim Durchführen einer Authentifizierung und Autorisierung der Single-Page-Anwendung 4 gemäß der Weiterbildung des dritten Ausführungsbeispiels. Im geschilderten Beispiel wird mit der Single-Page-Anwendung 4, 14 auf die erste SPS 101 zugegriffen, die Beschreibung gilt jedoch entsprechend auch für die anderen SPS 102, 103 und deren zugehörige Single-Page-Anwendungen 24 (Fig. 3) und 34 (Fig. 4).

Gemäß der Weiterbildung verfügt jede der SPS 101-103 über ein jeweiliges Geheimnis 51, 52, 53. In der externen Servervorrichtung 3 sind entsprechende Geheimnisse 61, 62, 63 abgelegt. Somit verfügen die ersten SPS 101 und die externe Servervorrichtung 3 über ein gemeinsames Geheimnis 51, 61, die zweite SPS 102 und die externe Servervorrichtung 3 verfügen über ein gemeinsames zweites Geheimnis 52, 62, und die dritte SPS 103 und die externe Servervorrichtung 3 verfügen über ein gemeinsames drittes Geheimnis 53, 63.

Wenn die Benutzervorrichtung 2 in Schritt S2 (Fig. 2) mit dem Nachladen beginnen möchte, stellt sie der externen Servervorrichtung 3 eine Kennung der ersten SPS 101 bereit. Die externe Servervorrichtung 3 generiert daraufhin eine Nonce (eine Zufallszahl, eine nur einmalig verwendete Zahl) 71 und übermittelt die Nonce 71 an die Benutzervorrichtung 2. Die Benutzervorrichtung 2 leitet die Nonce 71 an die SPS 101 weiter. Die SPS generiert basierend auf der Nonce 71 und dem gemeinsamen Geheimnis 51, beispielsweise mittels eines kryptografischen Hash-Verfahrens, eine eindeutige Antwort 72. Die SPS 101 übermittelt die eindeutige Antwort 72 an die Benutzervorrichtung 2, und die Benutzervorrichtung 2 leitet die Antwort 72 an die externe Servervorrichtung 3 weiter. Die externe Servervorrichtung 3 vergleicht sodann die erhaltene Antwort 72 mit einer Antwort, die die externe Servervorrichtung 3 selbst anhand der ihr bekannten Nonce 71 und dem gemeinsamen Geheimnis 61 nach demselben Verfahren generiert. Stimmen die Antworten überein, so ist die Vertrauensbeziehung zwischen SPS 101 und externer Servervorrichtung validiert und gleichzeitig die Single-Page-Anwendung 14 als eine auf die SPS 101 zugreifende Single-Page-Anwendung 14 authentifiziert und autorisiert. Demgemäß gestattet die Servervorrichtung 3 der Benutzervorrichtung in diesem Fall, nicht nur die generischen weiteren Datenabschnitte 42, 43, 44, sondern auch den für die SPS 101 spezifischen Projektdatenabschnitt 145 nachzuladen. Bei Fehlschlagen des Vergleichs würde letzterer Vorgang verweigert.

Das gemeinsame Geheimnis 51, 61 ist bei dem beschriebenen Verfahren durch Mithören auf dem Übertragungswege geschützt. Gleichzeitig erfordert das beschriebene Verfahren zum Validieren der Vertrauensbeziehung seitens der SPS 101 nur einen geringen Rechenaufwand und kann daher effizient implementiert werden.

In dem beschriebenen schlanken Verfahren kann das Geheimnis 51 der SPS 101 mit dem entsprechenden Geheimnis 61 der externen Servervorrichtung 3 identisch sein (sog. symmetrisches gemeinsames Geheimnis). Es ist jedoch auch denkbar, dass das Geheimnis 51 und das Geheimnis 61 ein asymmetrisches gemeinsames Geheimnis bilden. Hier könnten beispielsweise das Geheimnis 51 ein privater Schlüssel und das Geheimnis 61 der öffentliche Schlüssel sein. Die Antwort 72 ist in diesem Fall ein mithilfe des privaten Schlüssels 51 signierte Kopie der Nonce 71, und die Servervorrichtung 3 validiert die Signatur der Antwort 72 mit Hilfe des öffentlichen Schlüssels 61.

Denkbar ist auch, dass im Rahmen von Schritt S3 zur Validierung der Vertrauensbeziehung zwischen der SPS 101-103 und der externen Servervorrichtung 3 ein TLS-Handshake oder ein an TLS angelehnter Handshake zwischen der Steuervorrichtung 101-103 und der externen Servervorrichtung 3 durchgeführt wird, der von dem Webbrowser 21 und die Single-WebAnwendung 4 zwischen der SPS 101-103 und der externen Servervorrichtung 3 getunnelt wird.

Denkbar ist, für einen solchen Handshake ein sowieso vorhandenes Maschinenzertifikat der jeweiligen SPS 101-103 heranzuziehen, welches beim Handshake validiert und der SPS 101-103 eindeutig zugeordnet werden kann. In diesem Fall kann das Übertragen einer Kennung der SPS 101-103 durch die Benutzervorrichtung 2 zum Bezeichnen des gewünschten steuervorrichtungsspezifischen Datenabschnitts 145, 245, 345 entfallen, da die konkrete SPS 101-103 im Rahmen des Handshakes identifiziert werden kann und basierend auf einem Ergebnis des Identifizierens die externe Servervorrichtung 3 selbst den zu übertragenden Datenabschnitt aus den steuervorrichtungsspezifischen Projektdatenabschnitten 145, 245, 345 auswählen kann. Die Benutzervorrichtung 2 braucht in diesem Falle lediglich das Nachladen "eines" steuerungsspezifischen Projektdatenabschnitts anzufordern und kann die Auswahl des korrekten Projektdatenabschnitts der externen Servervorrichtung 3 überlassen.

Obwohl die vorliegende Erfindung anhand von Ausführungsbeispielen beschrieben wurde, ist sie vielfältig modifizierbar.

Es wurden Ausführungsbeispiele mit einer SPS 1 als Steuervorrichtung 1 beschrieben. Die Steuervorrichtung 1 kann jedoch eine beliebige computerisierte Vorrichtung sein, die über weniger Speicherplatz und/oder weniger Rechenleistung als die externe Servervorrichtung 3 verfügt. Die Steuervorrichtung 1 kann beispielsweise auch ein Embedded-Gerät, ein Industrie-PC, ein Constrained Device ohne Betriebssystem und dergleichen sein.

Es wurden Ausführungsbeispiele mit einem Webbrowser als Clientanwendung 21, einem Webserver als Serveranwendung 12 und einem entsprechenden Webserver 31 der externen Servervorrichtung 3 und mit Verwendung des HTML-Standards und des http/https-Protokolls beschrieben. Ebenso gut können jedoch darauf aufbauende oder gänzlich andere, zum Beispiel proprietäre, Clientanwendungen, Serveranwendungen, Standards oder Protokolle zum Einsatz kommen.

In den beschriebenen Ausführungsbeispielen sind auf den Steuervorrichtungen 1, 101-103 lediglich der erste Datenabschnitt 141, der als Indexdaten enthaltend beschrieben ist, und im Falle des zweiten Ausführungsbeispiels außerdem steuervorrichtungsspezifische Projektdaten 145, 245, 345 abgelegt. Der Programmdatenabschnitt 42, der den eigentlichen Programmcode der Single-Page-Anwendungen 4, 14, 24, 34 enthält, ist als generischer weiterer Datenabschnitt auf der externen Servervorrichtung 3 abgelegt. Hieraus folgt, dass die Single-Page-Anwendungen 4, 14, 24, 34 gleichartige Single-Page-Anwendungen 4 sind, die lediglich über die steuervorrichtungsspezifischen Projektdaten 145, 245, 345 auf die jeweils konkrete Steuervorrichtung 101, 102, 103 zugeschnitten und konfiguriert werden. Dies ist beispielsweise möglich, wenn die Single-Page-Anwendungen 4 ein gemeinsames generisches Datenmodell verwenden, das für alle Steuervorrichtungen 101-103 gilt und dessen Beschreibung etwa in dem generischen Projektdatenabschnitt 44 enthalten sein kann, und aus dem anhand von Angaben aus den spezifischen Projektdatenabschnitten 145, 245, 345 ein auf die jeweilige Steueraufgabe und Konfiguration der jeweiligen Steuervorrichtung 101, 102, 103 zugeschnittene Teilabschnitt des generischen Datenmodells ausgewählt wird.

Es besteht jedoch keine Einschränkung hierauf, und die durch die Clientanwendung 21 zu interpretierenden oder auszuführenden Programmdaten der jeweiligen Single-Page-Anwendungen 14, 24, 34 können sich auch je nach ausgewählter Steuervorrichtung 101, 102, 103 voneinander unterscheiden. Hierzu kann beispielsweise der erste Datenabschnitt 141, 241, 341 neben den Indexdaten auch steuerungsspezifische Programmdaten umfassen. Alternativ hierzu und besonders vorteilhaft können jedoch auch steuerungsspezifische Programmdatenabschnitte (nicht dargestellt) auf der externen Servervorrichtung 3 abgelegt werden und auf analoge Weise, wie für das dritte Ausführungsbeispiel für die steuerungsspezifischen Projektdatenabschnitte 145, 245, 345 beschrieben, abhängig von einer Kennung der ausgewählten Steuervorrichtung 101, 102, 103 oder abhängig von einer Identifizierung der Steuervorrichtung 101, 102, 103 im Rahmen eines TLS-artigen Handshakes durch die Benutzervorrichtung 2 von der externen Servervorrichtung 3 nachgeladen werden. Hierbei kann der Code, der, wenn er durch die Clientanwendung 21 ausgeführt wird, die Benutzervorrichtung 2 zum Nachladen der steuerungsspezifischen Projektdatenabschnitte 145. 245. 345 und der nicht dargestellten steuerungsspezifischen und Programmdatenabschnitte veranlasst, beispielsweise in dem generischen Programmdatenabschnitt 42 umfasst sein.

Gemäß einer weiteren nicht dargestellten Modifikation der beschriebenen Ausführungsbeispiele können die, in den Ausführungsbeispielen als auf der externen Servervorrichtung 3 abgelegt beschriebenen, weiteren Datenabschnitte, die normalerweise in Schritt S2 von der externen Servervorrichtung 3 nachgeladen werden, zusätzlich auch auf der jeweiligen Steuervorrichtung 1, 101, 102, 103 abgelegt sein (genauer gesagt: eine Kopie der weiteren Datenabschnitte kann auf der jeweiligen SPS 1 abgelegt sein). Hierdurch wird zwar zusätzlicher Speicherplatz in Form einer größeren Speicherkarte oder dergleichen auf der jeweiligen Steuervorrichtung 1, 101, 102, 103 benötigt. Es bleibt jedoch weiterhin der Vorteil bestehen, dass die externe Servervorrichtung 3 die dort abgelegten weiteren Datenabschnitte schneller an die Benutzervorrichtung 2 ausliefern kann als die Steuervorrichtung 1, 101, 102, 103 dies könnte. Der Effizienzvorteil bleibt also erhalten, solange das Nachladen von der externen Servervorrichtung 3 erfolgt. Wenn jedoch die Benutzervorrichtung 2 in Schritt S2 einen weiteren Datenabschnitt 42, 43, 44, 145, 245, 345 von der externen Servervorrichtung 2 nachladen möchte, die externe Servervorrichtung 3 jedoch vorübergehend nicht erreichbar ist, kann gemäß der vorgeschlagenen Modifikation statt des nicht verfügbaren weiteren Datenabschnitts 42, 43, 44, 145, 245, 345 die entsprechende Kopie davon von der Steuervorrichtung 1, 101, 102, 103 nachgeladen werden. Dies kann dann zwar vergleichsweise lange dauern, sichert aber die grundsätzliche Verfügbarkeit der Zugänglichkeit der Funktionalität der Steuervorrichtung 1, 101, 102, 103 auch im Falle eines Ausfalls der Verbindung zur externen Servervorrichtung 3. Es kann also der zusätzliche Vorteil der Redundanz und Ausfalltoleranz erzielt werden. Zu diesem Zwecke kann der erste Datenabschnitt 41, 141, 241, 341 beispielsweise in dieser Reihenfolge sowohl die externe Servervorrichtung 103 als auch die jeweilige Steuervorrichtung 1, 101, 102, 103 als alternative Quellen zum Nachladen der weiteren Datenabschnitte 42, 43, 44, 145, 245, 345 referenzieren.

In den Figuren 1, 3, 4 und 5 ist die externe Servervorrichtung 3 als Cloud visualisiert, um anzudeuten, dass die externe Servervorrichtung 3 als Dienst in einer privaten Cloud oder dergleichen implementiert sein kann. Es ist jedoch selbstverständlich auch denkbar, die externe Servervorrichtung 3 als eigenständige Hardware, beispielsweise als Server-PC, Industrie-PC, oder dergleichen zu implementieren. Eine solche externe Servervorrichtung 3 kann kundenseitig als Teil des industriellen Automatisierungssystems 100, jedoch extern zu jeder der Steuervorrichtungen 1 und der Benutzervorrichtung 2, bereitgestellt sein.

Es versteht sich, dass Verfahrensschritte, die in der vorliegenden Beschreibung zur Vereinfachung der Darstellung einer der Vorrichtungen, wie der Steuervorrichtung 1, der Benutzervorrichtung 2, oder der Servervorrichtung zugeordnet wurde, dadurch von der jeweiligen Vorrichtung ausgeführt werden können, dass sie von auf der Vorrichtung ausgeführtem Programmcode, wie einer Clientanwendung oder einer Serveranwendung ausgeführt werden. Beispielsweise können Verfahrensschritte, die von der Benutzervorrichtung 2 durchgeführt werden, von der Clientanwendung 21, wie dem Webbrowser 21, durchgeführt werden, oder auch von der in der Clientanwendung 21 interpretierten oder ausgeführten Single-Page-Anwendung 4. Insbesondere kann das Nachladen weiterer Abschnitte der Single-Page-Anwendung 4 auch von einem bereits geladenen ersten Abschnitt der Single-Page-Anwendung 4 durchgeführt werden.

Unabhängig vom grammatikalischen Geschlecht eines bestimmten Begriffes, wie beispielsweise "Benutzer", "Betreiber", "Anbieter" etc., sind Personen mit männlicher, weiblicher oder anderer Geschlechteridentität mit umfasst.

## Patentansprüche

1. Verfahren zum Gewähren von Zugriff auf Funktionalität in einem industriellen Automatisierungssystem (100) mittels einer auf einer Benutzervorrichtung (2) ausgeführten Single-Page-Anwendung (4), umfassend:
- Laden (S1), durch die Benutzervorrichtung (2), eines auf einer Steuervorrichtung (1) abgelegten ersten Datenabschnitts (41) der Single-Page-Anwendung (4);
- Nachladen (S2), durch die Benutzervorrichtung (2), einer Anzahl von in dem ersten Datenabschnitt (41) spezifizierten weiteren für die Ausführung der Single-Page-Anwendung (4) benötigten und auf einer externen Servervorrichtung (3) abgelegten Datenabschnitte (42, 43) von der externen Servervorrichtung (3); und
- Zugreifen (S3) auf die Funktionalität der Steuervorrichtung (1) durch die auf der Benutzervorrichtung (2) ausgeführte Single-Page-Anwendung (4).

2. Verfahren nach Anspruch 1,
**dadurch gekennzeichnet,**
**dass** das Laden (S1) und das Nachladen (S2) der Datenabschnitte (41, 42, 43) durch Abrufen statischer Dateien von der Steuervorrichtung (2) und von der externen Servervorrichtung (3) erfolgt.

3. Verfahren nach Anspruch 1 oder 2,
**dadurch gekennzeichnet,**
**dass** das Zugreifen (S3) auf die Funktionalität der Steuervorrichtung (1) durch API-Aufrufe an eine von der Steuervorrichtung (1) bereitgestellte Datenschnittstelle (12) erfolgt.

4. Verfahren nach einem der Ansprüche 1 bis 3,
**dadurch gekennzeichnet,**
**dass** die weiteren Datenabschnitte (42, 43) auch auf der Steuervorrichtung (1) abgelegt sind und im Falle einer Nichtverfügbarkeit der externen Servervorrichtung (3) das Nachladen (S2) der weiteren benötigten Datenabschnitte (42, 43) von der Steuervorrichtung (1) anstelle der externen Servervorrichtung (3) erfolgt.

5. Verfahren nach einem der Ansprüche 1 bis 4,
**dadurch gekennzeichnet,**
**dass** der erste von der Steuervorrichtung (1) an die Benutzerdatenvorrichtung (2) übertragene Datenabschnitt (41) der Single-Page-Anwendung (4) eine Index-Seite umfasst.

6. Verfahren nach Anspruch 5,
**dadurch gekennzeichnet,**
**dass** von der Steuervorrichtung (1) ausschließlich die Index-Seite und keine sonstigen von der Single-Page-Anwendung (4) benötigten Datenabschnitte (42, 43) geladen werden.

7. Verfahren nach einem der Ansprüche 1 bis 6,
**dadurch gekennzeichnet,**
**dass** die Anzahl von der externen Servervorrichtung (3) nachgeladener Datenabschnitte einen Programmcodeabschnitt (42) und/oder einen Ressourcenabschnitt (43) der Single-Page-Anwendung (4) umfasst.

8. Verfahren nach einem der Ansprüche 1 bis 7,
**dadurch gekennzeichnet,**
**dass** die Anzahl von der externen Servervorrichtung (3) nachgeladener Datenabschnitte einen generischen Projektdatenabschnitt (44) zur Verwendung durch die Single-Page-Anwendung (4) umfasst.

9. Verfahren nach einem der Ansprüche 1 bis 8,
**dadurch gekennzeichnet,**
**dass** die Anzahl von der externen Servervorrichtung (3) nachgeladener Datenabschnitte einen für die Steuervorrichtung (101, 102, 103) spezifischen Projektdatenabschnitt (145, 245, 345) zur Verwendung durch die Single-Page-Anwendung (14, 24, 34) umfasst.

10. Verfahren nach einem der Ansprüche 1 bis 9,
**dadurch gekennzeichnet,**
**dass** die Benutzervorrichtung (2) zum Nachladen der Datenabschnitte (42, 43, 44, 145, 245, 345) von der externen Servervorrichtung (3) authentifiziert und autorisiert wird.

11. Verfahren nach Anspruch 10,
**dadurch gekennzeichnet,**
**dass** bei dem Authentifizieren und Autorisieren der Benutzerverrichtung (2) eine Vertrauensbeziehung zwischen der Steuervorrichtung (1, 101, 102, 103) und der externen Servervorrichtung (3) validiert wird.

12. Verfahren nach Anspruch 11,
**dadurch gekennzeichnet,**
**dass** die externe Servervorrichtung (3) einen Nonce-Wert (71) an die Benutzervorrichtung (2) übermittelt,
die Benutzervorrichtung (2) den Nonce-Wert (71) an die Steuervorrichtung (1, 101) übermittelt,
die Steuervorrichtung (1, 101) mittels eines mit der externen Steuervorrichtung (3) geteilten gemeinsamen Geheimnisses (51, 61) eine Antwort (72) auf Basis des Nonce-Werts (71) erzeugt und die Antwort (72) an die Benutzervorrichtung (2) übermittelt,
die Benutzervorrichtung (2) die Antwort an die externe Servervorrichtung (3) übermittelt,
die externe Servervorrichtung (3) die Vertrauensbeziehung zwischen der Steuervorrichtung (1, 101) und der externen Servervorrichtung (3) anhand der übermittelten Antwort (72) validiert.

13. Verfahren nach einem der Ansprüche 1 bis 12
**dadurch gekennzeichnet,**
**dass** die Single-Page-Anwendung (4) ausschließlich clientseitig auf der Benutzervorrichtung (2) ausgeführt wird.

14. Computerprogrammprodukt, umfassend Befehle, die bei der Ausführung des Programms durch einen Computer diesen veranlassen, das Verfahren nach einem der Ansprüche 1 - 14 auszuführen, wobei das Computerprogrammprodukt einen ersten Datenabschnitt (41), der zur Ablage auf der Steuervorrichtung (3) vorgesehen ist, und mindestens einen weiteren Datenabschnitt (42, 43) umfasst, der zur Ablage auf der externen Servervorrichtung (3) vorgesehen ist.

15. Industrielles Automatisierungssystem (100), aufweisend eine Steuervorrichtung (1), eine Benutzervorrichtung (2) und eine externe Servervorrichtung (3), wobei auf der Steuervorrichtung (1) ein erster Datenabschnitt (41) einer Single-Page-Anwendung (4) abgelegt ist, eine Anzahl von in dem ersten Datenabschnitt (41) spezifizierten weiteren für die Ausführung der Single-Page-Anwendung (4) benötigte Datenabschnitte (42, 43) auf der externen Servervorrichtung (3) abgelegt ist, und die Benutzervorrichtung (2) dazu eingerichtet ist, auf die Funktionalität der Steuervorrichtung (1) zuzugreifen durch:
- Laden (S1) des auf der Steuervorrichtung (1) abgelegten ersten Datenabschnitts (41),
- Nachladen (S2) der weiteren benötigten Datenabschnitte (42, 43) von der externen Servervorrichtung (3); und
- Ausführen (S3) der Single-Page-Anwendung (4), um auf die Funktionalität der Steuervorrichtung (1) zuzugreifen.
